# EUROPEAN PATENT APPLICATION

(11) **EP 4 757 022 A1**
(43) Date of publication of application: **10.06.2026**
(21) Application number: 24847675.6
(22) Date of filing: 30.04.2024
(51) Int. Cl.: H01M 50/204, H01M 10/6556

(54) **BOX BODY ASSEMBLY, CASING, BATTERY PACK AND VEHICLE**

(30) Priority: 31.07.2023 CN 202322051920 U
(71) Applicant: BYD Company Limited, Shenzhen, Guangdong 518118 (CN)
(72) Inventor: XIONG, Yong, Shenzhen, Guangdong 518118 (CN); XU, Wei, Shenzhen, Guangdong 518118 (CN); WU, Jiali, Shenzhen, Guangdong 518118 (CN); LIU, Jing, Shenzhen, Guangdong 518118 (CN); SHEN, Jiayong, Shenzhen, Guangdong 518118 (CN)
(74) Representative: Mathys & Squire
(86) International application number: PCT/CN2024/090748
(87) International publication number: WO 2025/025709

(57) **Abstract**

A box body assembly, and a casing, a battery pack and a vehicle that use the box body assembly are provided. The box body assembly includes a flow channel plate and a cover plate. A flow channel groove is formed in the flow channel plate, the cover plate is fastened to the flow channel plate to cover the flow channel groove and define a heat exchange flow channel for circulation of a heat exchange medium, and the cover plate is configured to be defined by at least one of a box body and a box cover.

## Description

### CROSS-REFERENCE TO RELATED APPLICATION

This application claims priority to Chinese patent application No. 2023220519203, filed on July 31, 2023 and entitled "BOX BODY ASSEMBLY, CASING, BATTERY PACK, AND VEHICLE", which is incorporated herein by reference in its entirety.

### TECHNICAL FIELD

This application relates to the field of batteries, and in particular, to a box body assembly, a casing, a battery pack, and a vehicle.

### BACKGROUND

In related technologies, a battery pack has a box cover and a box body, a cell is separately connected to the box cover and the box body, and the battery pack is directly connected to a vehicle body. In this case, a cooling plate needs to be mounted separately into the box body or the box cover. The box cover, box body, and cooling plate of the battery pack are all separate structural components with low functional integration, resulting in low processing and assembly efficiency for the battery pack.

### SUMMARY

This application is intended to resolve at least one of the technical problems in the prior art. Therefore, an objective of this application is to propose a box body assembly for a battery pack. A design of the box body assembly enables a box body and/or a box cover to integrate a structure of the box body assembly and to have a heat exchange function of the box body assembly, thereby simplifying the structure of the box body assembly and enriching functions of the box body and/or the box cover.

This application further proposes a casing having the foregoing box body assembly.

This application further proposes a battery pack having the foregoing casing.

This application further proposes a vehicle having the foregoing battery pack.

The box body assembly according to this application is used in the battery pack, and the battery pack includes the box body and the box cover that are fitted together to define an accommodation cavity. The box body assembly includes a flow channel plate, a flow channel groove being formed in the flow channel plate; and a cover plate, the cover plate being fastened to the flow channel plate to cover the flow channel groove and define a heat exchange flow channel for circulation of a heat exchange medium, and the cover plate being configured to be defined by at least one of the box body and the box cover.

According to the box body assembly of this application, the cover plate of the box body assembly may be a portion of the box body and/or the box cover that cooperates with the flow channel plate, so that a structure of the box body and/or the box cover of the battery pack that integrates the cover plate has a function of exchanging heat with a cell in the accommodation cavity. This may reduce costs of the battery pack, improve production efficiency, simplify structure of the battery pack, and reduce weight of the battery pack.

The casing according to this application includes a box body and a box cover, the box body and the box cover fitting together to define an accommodation cavity; and a box body assembly, the box body assembly being configured as the box body assembly in any one of the foregoing embodiments, and the cover plate being configured to be defined by at least one of the box body and the box cover.

Because the casing according to this application is provided with the box body assembly in the foregoing embodiment, the casing can seal the accommodation cavity and exchange heat with the accommodation cavity, achieving higher functional integration.

The battery pack according to this application includes: a casing, the casing being configured as the casing in any one of the foregoing embodiments; and a cell, the cell being disposed in the accommodation cavity.

Because the battery pack according to this application is provided with the casing in the foregoing embodiment, the battery pack has a simple structure and fewer component parts, is easy and convenient to manufacture, has good production feasibility, high production efficiency, low labor costs, low processing costs, and high safety in use.

The vehicle according to this application includes the battery pack in the foregoing embodiments.

Because the vehicle according to this application is provided with the battery pack in the foregoing embodiments, the vehicle is safer and more reliable in use.

Additional aspects and advantages of this application will be set forth in part in the following descriptions, and in part will be apparent from the following description or may be learned through practice of this application.

### BRIEF DESCRIPTION OF DRAWINGS

FIG. 1 is a diagram of an overall structure of a battery pack according to an embodiment of this application;
FIG. 2 is an exploded view of a battery pack according to an embodiment of this application;
FIG. 3 is a top view of a flow channel plate according to an embodiment of this application;
FIG. 4 is a side cross-sectional view of a battery pack according to an embodiment of this application;
FIG. 5 is an enlarged view of a circle A in FIG. 4;
FIG. 6 is a side cross-sectional view of a box body assembly according to an embodiment of this application; and
FIG. 7 is a diagram of a structure of a vehicle according to an embodiment of this application.

### [Reference numerals]

1: battery pack;
10: casing; 10a: accommodation cavity; 11: box body; 12: box cover;
13: box body assembly; 13a: flow splitting channel; 13b: flow converging channel; 13c: flow converging end; 131: flow channel plate; 1311: reinforcing part; 132: cover plate;
14: reinforcing member; 15: bottom guard plate;
20: cell; 30: expansion beam;
1000: vehicle.

### DESCRIPTION OF EMBODIMENTS

The following describes embodiments of this application in detail. Examples of embodiments are shown in the accompanying drawings. Same or similar reference numerals represent same or similar elements or elements with same or similar functions throughout. The following embodiments described with reference to the accompanying drawings are examples, and are merely intended to explain this application, but should not be construed as a limitation on this application.

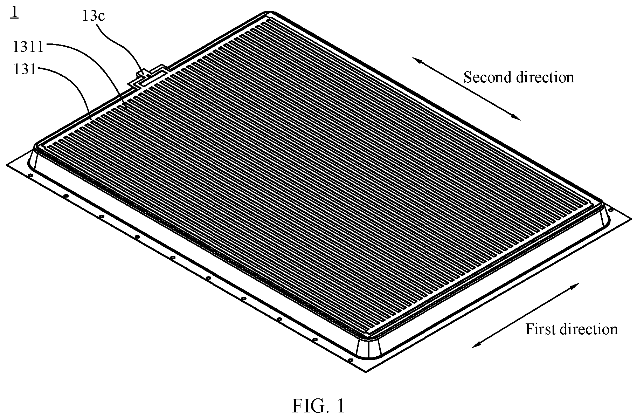

With reference to FIG. 1 to FIG. 6, the following describes a box body assembly 13 for a battery pack 1 according to an embodiment of this application.

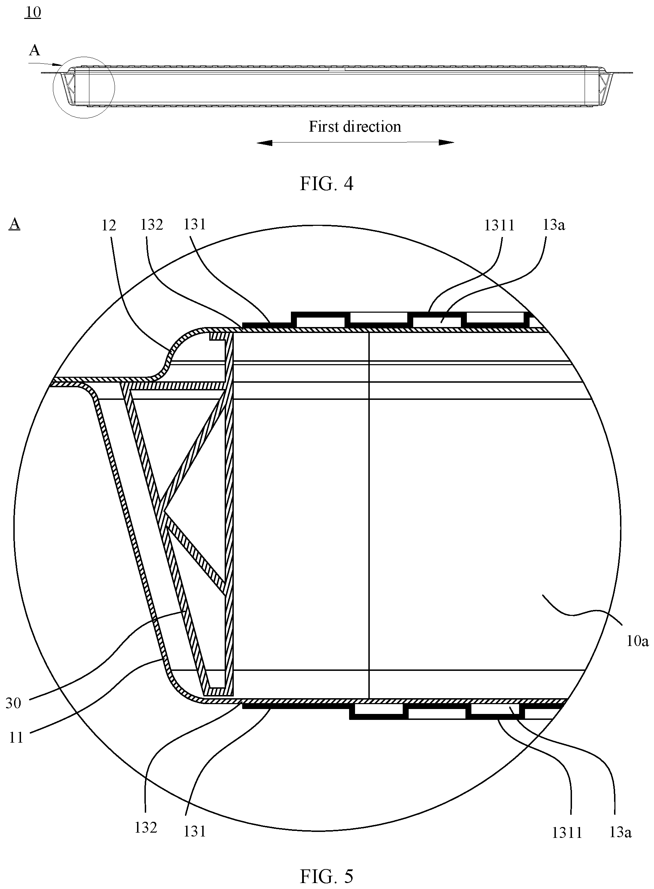

As shown in FIG. 4 to FIG. 6, the box body assembly 13 according to this application is used in the battery pack 1, and the battery pack 1 includes a box body 11 and a box cover 12 that are fitted together to define an accommodation cavity 10a. The box body assembly 13 includes a flow channel plate 131 and a cover plate 132. A flow channel groove is formed in the flow channel plate 131. The cover plate 132 is fastened to the flow channel plate 131 to cover the flow channel groove and define a heat exchange flow channel for circulation of a heat exchange medium. The cover plate 132 is configured to be defined by at least one of the box body 11 and the box cover 12. The cover plate 132 is adapted to exchange heat with a cell 20 in the accommodation cavity 10a. In some embodiments, after the cover plate 132 and the flow channel plate 131 are fitted together, the flow channel groove formed in the flow channel plate 131 is closed, so that the cover plate 132 and the flow channel plate 131 jointly define the flow channel groove as the heat exchange flow channel. The heat exchange medium can only flow along an extension direction of the heat exchange flow channel. In this case, the box body assembly 13 has a function of exchanging heat with the cell 20 in the accommodation cavity 10a. In some embodiments, the flow channel plate 131 may cooperate with at least one of the box body 11 and the box cover 12 to define the heat exchange flow channel. Herein, a portion of the box body 11 and the box cover 12 that cooperates with the flow channel plate 131 is configured as the cover plate 132. This design may allow the box body 11 and/or the box cover 12 of the battery pack 1 to integrate the flow channel plate 131, and allow the box body 11 and/or the box cover 12 of the battery pack 1 to exchange heat with the cell 20 in the accommodation cavity 10a, thereby simplifying a structure of the battery pack 1 and reducing a weight of the battery pack 1.

According to the box body assembly 13 of this application, the cover plate 132 of the box body assembly 13 may be the portion of the box body 11 and/or the box cover 12 that cooperates with the flow channel plate 131, so that a structure of the box body 11 and/or the box cover 12 of the battery pack 1 that integrates the cover plate 132 has a function of exchanging heat with the cell 20 in the accommodation cavity 10a. This may reduce costs of the battery pack 1, improve production efficiency, simplify the structure of the battery pack 1, and reduce the weight of the battery pack 1.

It will be understood that the flow channel plate 131 may be disposed in a plurality of manners. In some embodiments, the flow channel plate 131 may be disposed on the box cover 12, so that at least a portion of the box cover 12 forms the cover plate 132 and has the function of exchanging heat with the cell 20 in the accommodation cavity 10a. In some other embodiments, the flow channel plate 131 may be disposed on the box body 11, so that at least a portion of the box body 11 forms the cover plate 132 and has the function of exchanging heat with the cell 20 in the accommodation cavity 10a. In other embodiments, the flow channel plate 131 may be disposed on both the box cover 12 and the box body 11. In this arrangement, thermal management of the battery pack 1 can be better controlled, heat generated by cell 20 in the accommodation cavity 10a can be removed more rapidly, and the battery pack 1 is cooled more quickly, effectively reducing a risk of thermal runaway of the battery pack 1. An arrangement manner of the box body assembly 13 and a mounting position of the flow channel plate 131 can be flexibly selected based on different requirements, which are not limited herein.

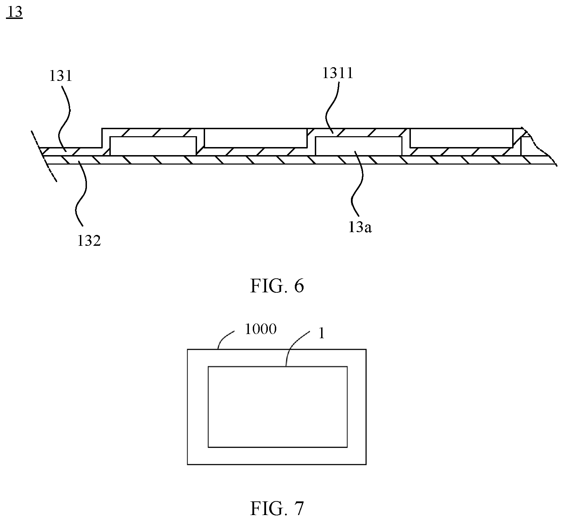

According to some embodiments of this application, as shown in FIG. 5 and FIG. 6, at least a portion of the flow channel plate 131 protrudes toward a direction away from the cover plate 132 to define the flow channel groove. In some embodiments, the flow channel groove is formed in a portion of a reinforcing part 1311 that faces the cover plate 132, and the cover plate 132 covers the flow channel groove to define the heat exchange flow channel. In some embodiments, a portion of the flow channel plate 131 forms the reinforcing part 1311, and there is a height difference between the reinforcing part 1311 and another portion of the flow channel plate 131, so that the reinforcing part 1311 may play a structural reinforcement role on a surface of the flow channel plate 131 that is away from the cover plate 132. In this way, the box body assembly 13 can exchange heat with the cell 20 in the accommodation cavity 10a and a structural strength of the battery pack 1 is enhanced, thereby enriching functions of the box body assembly 13.

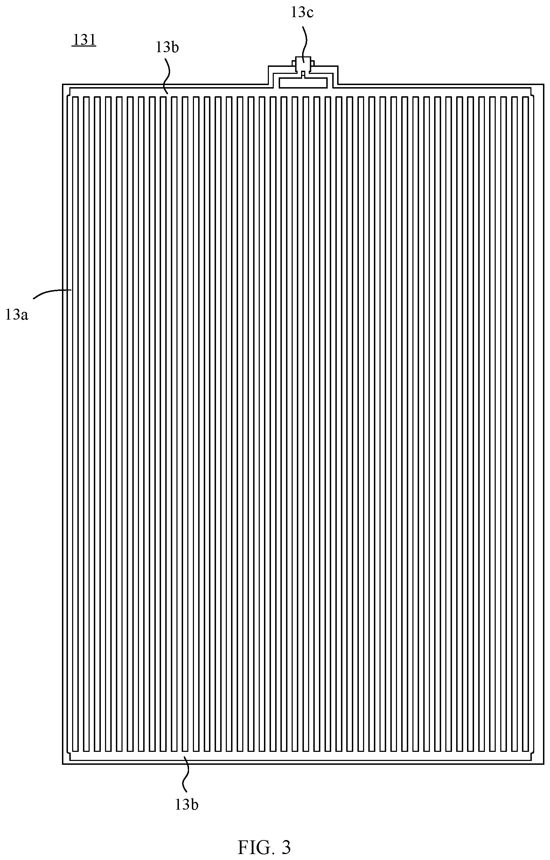

In some embodiments of this application, as shown in FIG. 3 to FIG. 6, the heat exchange flow channel includes a plurality of flow splitting channels 13a and at least one flow converging channel 13b. The plurality of flow splitting channels 13a are spaced apart along a first direction, and each flow splitting channel 13a extends along a second direction. At least a portion of the plurality of flow splitting channels 13a communicates with the same flow converging channel 13b. The second direction is orthogonal to the first direction. As shown in FIG. 3, the flow channel plate 131 has a flow converging end 13c that communicates with the heat exchange channel. The heat exchange flow channel may communicate with a heat exchange structure outside the battery pack 1 through the flow converging end 13c, so that after the heat exchange medium in the heat exchange flow channel exchanges heat with the accommodation cavity 10a for the first time, the heat exchange medium carrying heat may flow through the flow converging end 13c to the heat exchange structure outside the battery pack 1 for heat exchange and cooling. The heat exchange medium after heat exchange and cooling then flows back to the heat exchange channel through the flow converging end 13c to exchange heat with the accommodation cavity 10a again. In some embodiments, the heat exchange flow channel includes a plurality of flow splitting channels 13a. The plurality of flow splitting channels 13a are arranged spaced apart along the first direction and extend along the second direction, so that the flow splitting channels 13a can cover a large area of the box body 11 and/or the box cover 12, thereby improving heat exchange efficiency and heat exchange effect. Herein, the flow converging channel 13b may be provided at an end of the flow splitting channel 13a or is connected to a middle portion of the flow splitting channel 13a in the extension direction. The heat exchange medium in the flow splitting channel 13a may flow into the flow converging channel 13b and then flow to the outside of the battery pack 1 through the flow converging end 13c. Alternatively, the heat exchange medium in the flow splitting channel 13a flows directly to the outside of the battery pack 1 through the flow converging end 13c. This is not limited herein.

In some embodiments, the flow converging end 13c may be provided in a plurality of flow converging ends 13c that communicate with each other. In the second direction, same ends of the plurality of flow splitting channels 13a may communicate with a plurality of flow converging ends 13c, and the other ends of the plurality of flow splitting channels 13a communicate with the same flow converging channel 13b, or the other ends of the plurality of flow splitting channels 13a are all closed. Alternatively, as shown in FIG. 3, the flow converging end 13c is provided in a single one. In the second direction, same ends of the plurality of flow splitting channels 13a communicate with the same flow converging channel 13b, the flow converging channel 13b communicates with the flow converging end 13c. The other ends of the plurality of flow splitting channels 13a communicate with another flow converging channel 13b, or the other ends of the plurality of flow splitting channels 13a are all closed.

In some other embodiments, the plurality of flow splitting channels 13a are divided into a plurality of groups. Each group of flow splitting channels 13a includes at least one flow splitting channel 13a. In the second direction, each group of flow splitting channels 13a has two ends. At least one end of each group of flow splitting channels 13a communicates with a flow converging channel 13b, so that the heat exchange medium in the flow splitting channel 13a may flow into the flow converging channel 13b. The plurality of groups of flow splitting channels 13a correspond to a plurality of flow converging channels 13b. The plurality of flow converging channels 13b may be provided in a staggered manner at both ends in the second direction, to increase a flow channel length of the heat exchange medium, thereby increasing flow time of the heat exchange medium and heat exchange time, and improving heat exchange efficiency and heat exchange effect.

According to some embodiments of this application, both the cover plate 132 and the flow channel plate 131 are integrated parts molded by stamping. In some embodiments, the box body 11, the box cover 12, and the flow channel plate 131 are all integrated parts molded by stamping. The entire battery pack 1 includes a structural component molded by stamping, with a small quantity of parts. Moreover, the box body 11 and the box cover 12 are both integral structures, which may improve sealing performance of the box body 11 and the box cover 12 on the accommodation cavity 10a. The box body 11 and the box cover 12 are manufactured through stamping process, which may reduce mechanical processing operations, making the battery pack 1 simple and convenient to process, with good production feasibility, high production efficiency, low labor costs, and low processing costs.

In some embodiments, the box cover 12 and the box body 11 may be made of an aluminum sheet by stamping, or may be made of a steel sheet by stamping, or may be made of a steel-aluminum composite sheet by stamping, which is not specifically limited herein.

In some embodiments, the box cover 12 and the box body 11 may alternatively be manufactured by sheet metal bending or splice welding, or may be molded by stamping.

According to some embodiments of this application, the cover plate 132 and the flow channel plate 131 are welded or bonded together. In some embodiments, the box body 11 and the flow channel plate 131, and the box cover 12 and the flow channel plate 131, may be connected by welding or bonding, provided that a connection between the box body 11 and the flow channel plate 131 and a connection between the box cover 12 and the flow channel plate 131 are stable. A specific manner may be selected based on a requirement of the battery pack 1, and is not limited herein.

In some embodiments, the cover plate 132 and the flow channel plate 131 are bonded together with thermally conductive adhesive.

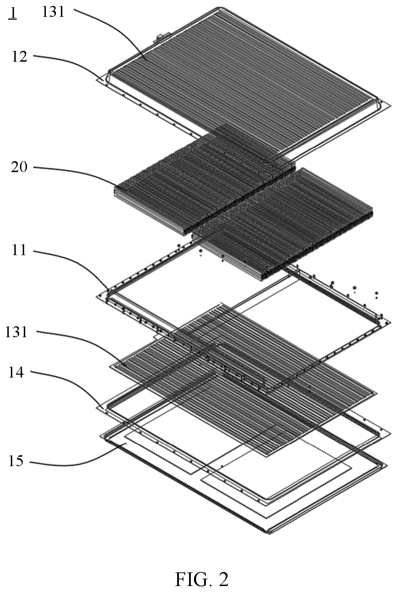

According to some embodiments of this application, as shown in FIG. 2, the box body assembly 13 further includes a reinforcing member 14. The reinforcing member 14 is disposed on the cover plate 132 and surrounds the flow channel plate 131. In some embodiments, after the flow channel plate 131 and the cover plate 132 are fitted together, the reinforcing member 14 may be disposed on the cover plate 132 and surrounds the flow channel plate 131, thereby improving structural strength of the cover plate 132.

In some embodiments, the reinforcing member 14 is molded by stamping.

In some embodiments, the reinforcing member 14 is connected to the cover plate 132 by welding, to improve the structural strength of the cover plate 132. In addition, fewer processing processes are needed in the welding connection, which may reduce production costs and improve production efficiency.

According to some embodiments of this application, the cover plate 132 is provided with a mounting part mounted to a vehicle body, and the mounting part is located on a side of the cover plate 132 that faces the flow channel plate 131. In some embodiments, the cover plate 132 is fastened to the vehicle body to suspend the battery pack 1 from the vehicle body. Specifically, the vehicle body has a crossbeam, the mounting part is disposed on an outer circumference of the cover plate 132, and the mounting part is adapted to be mounted to the crossbeam of the vehicle body, thereby fastening the cover plate 132 to the vehicle body and suspending the battery pack 1 from the vehicle body.

The following briefly describes a casing 10 for the battery pack 1 according to this application.

As shown in FIG. 4 and FIG. 5, the casing 10 according to this application includes the box body 11, box cover 12 and box body assembly 13. The box body 11 and box cover 12 are fitted together to define the accommodation cavity 10a, the box body assembly 13 is configured as the box body assembly 13 in any one of the foregoing embodiments, and the cover plate 132 is configured to be defined by at least one of the box body 11 and the box cover 12. In some embodiments, the casing 10 of the battery pack 1 includes the box body 11 and the box cover 12. The flow channel plate 131 is integrated into at least one of the box body 11 and the box cover 12, so that the box body 11 and/or the box cover 12 of the battery pack 1 can seal the accommodation cavity 10a and exchange heat with the cell 20 in the accommodation cavity 10a. In some embodiments, the flow channel plate 131 may be disposed on a surface of the box body 11 and/or the box cover 12 that faces the accommodation cavity 10a, to improve heat exchange effect between the heat exchange medium and the accommodation cavity 10a. Alternatively, the flow channel plate 131 may be disposed on a surface of the box body 11 and/or the box cover 12 that is away from the accommodation cavity 10a, to avoid that the flow channel plate 131 occupies internal space of the accommodation cavity 10a. Because the casing 10 according to this application is provided with the box body assembly 13 in the foregoing embodiment, the casing 10 can seal the accommodation cavity 10a and exchange heat with the cell 20 in the accommodation cavity 10a, achieving higher functional integration.

According to some embodiments of this application, as shown in FIG. 2, the casing 10 further includes the reinforcing member 14 and a bottom guard plate 15. The reinforcing member 14 is disposed at the bottom of box body 11 and surrounds the flow channel plate 131. After the flow channel plate 131 and the cover plate 132 are fitted together, the reinforcing member 14 may be disposed on the cover plate 132 and surrounds an outer circumference of flow channel plate 131, thereby improving the structural strength of the cover plate 132. It will be understood that, to ensure sealing effect of the accommodation cavity 10a, during mounting of the bottom guard plate 15, it is necessary to avoid making a hole in the bottom of the box body 11. Therefore, a fixing hole is provided in the reinforcing member 14, and the bottom guard plate 15 is fastened to the reinforcing member 14 through the fixing hole and located below the reinforcing member 14. In this case, the bottom guard plate 15 is located at the bottom of the battery pack 1 to protect the bottom of the battery pack 1 and prevent the battery pack 1 from being collided.

In some embodiments, the bottom guard plate 15 is generally made of a steel plate and an energy-absorbing material, so that the bottom guard plate 15 has a function of shock absorption and protection of the box body 11.

The following briefly describes the battery pack 1 according to this application.

As shown in FIG. 1 and FIG. 2, the battery pack 1 according to this application includes the casing 10 and the cell 20. The casing 10 is configured as the casing 10 in any one of the foregoing embodiments. The cell 20 is disposed in the accommodation cavity 10a. During operation of the battery pack 1, the cell 20 generates heat, and the heat is transferred within the accommodation cavity 10a. In this case, a heat exchange medium flowing along a surface of the casing 10 may exchange heat with the cell 20 in the accommodation cavity 10a for cooling the cell 20, thereby cooling the battery pack 1 and improving use safety of the battery pack 1. Because the battery pack 1 according to this application is provided with the casing 10 in the foregoing embodiment, the battery pack 1 has a simple structure and fewer component parts, is easy and convenient to manufacture, has good production feasibility, high production efficiency, low labor costs, low processing costs, and high safety in use.

In some embodiments of this application, as shown in FIG. 2, the cell 20 is provided in a plurality of cells 20 that are stacked. In some embodiments, the plurality of cells 20 may be configured as a plurality of groups of cells 20 that are stacked. Each cell 20 is configured as a blade cell 20 and extends along the second direction. Energy density of the battery pack 1 may be increased in this arrangement of the cell 20. Pole posts are disposed at both ends of each cell 20 in the second direction. Each group of cells 20 is stacked in the first direction. Two surfaces of each cell 20 in a direction from the box body 11 to the box cover 12 are in contact with the box body 11 and the box cover 12. This may increase contact area between the heat exchange flow channel and the cell 20, and is conducive to heat dissipation. The battery pack 1 further includes an expansion beam 30. The expansion beam 30 is provided between at least one side of the plurality of cells 20 in the stacking direction and an inner wall of the casing 10, and the expansion beam 30 is adapted to abut against the cell 20 to limit expansion of the cell 20, ensuring dimensional stability and structural safety of the battery pack 1. The expansion beam 30 may be provided in one or more expansion beams 30, and abuts against at least one side of at least one group of cells 20 in the stacking direction.

In some embodiments, the expansion beam 30 may be made of aluminum profile, or may be made of another metal material.

In some embodiments, the expansion beam 30 is welded or bonded to a surface of the box body 11 that faces the accommodation cavity 10a.

In some embodiments, a thermally conductive adhesive layer is provided between a surface of the cell 20 that faces the box body 11 and a surface of the box body 11 that faces the cell 20, so that box body 11 can conduct heat from the cell 20 while carrying the cell 20. In this case, the box body 11 may connect to the flow channel plate 131 to act as the cover plate 132 to dissipate heat from the cell 20.

In some embodiments, a thermally conductive adhesive layer is provided between a surface of the cell 20 that faces the box cover 12 and a surface of the box cover 12 that faces the cell 20, so that the box cover 12 can conduct heat from the cell 20 while being connected to the cell 20. In this case, the box cover 12 is connected to the flow channel plate 131 to act as the cover plate 132 to dissipate heat from the cell 20. The thermally conductive adhesive layer is provided, so that the box cover 12 may provide a tensile force that has a magnitude equal to a portion of a gravity of the cell 20 and that is in a direction opposite to the cell 20, to reduce a load on the box body 11.

The following briefly describes a vehicle 1000 according to this application.

As shown in FIG. 7, the vehicle 1000 according to this application includes the battery pack 1 in any one of the foregoing embodiments. Because the vehicle 1000 according to this application is provided with the battery pack 1 in the foregoing embodiments, the vehicle 1000 is safer and more reliable in use.

In some embodiments of this application, the vehicle 1000 further includes a vehicle body, the vehicle body is fastened to a box cover 12, and the vehicle body and the box cover 12 jointly define a passenger compartment. The battery pack 1 is configured as the box cover 12 fastened to the vehicle body, and jointly defines the passenger compartment with the vehicle body. In some embodiments, the box cover 12 of the battery pack 1 faces the vehicle body and is directly connected to the vehicle body. In this case, the box cover 12 acts as a floor of the vehicle body, allowing the battery pack 1 to be suspended from the vehicle body. In this case, the box cover 12 may be connected to a flow channel plate 131, so that the box cover 12 acts as a cover plate 132 to dissipate heat from a cell 20. In this way, the box cover 12 can fit with a box body 11 to encapsulate the cell 20, fit with the vehicle body to act as the floor of the vehicle body, and dissipate heat from the cell 20. The box cover 12 has a plurality of functions, and mounting of the box cover 12 can meet various requirements of the battery pack 1 without a need for another encapsulation, connection, or heat dissipation structure, thereby improving processing and assembly efficiency of the battery pack 1.

The box cover 12 is fastened to the vehicle body to suspend the battery pack 1 from the vehicle body. Specifically, the vehicle body has a crossbeam, at least a portion of the crossbeam extends away from the passenger compartment and is configured as a connection segment, the box cover 12 is configured as the cover plate 132, a mounting part is disposed on an outer circumference of the box cover 12, the mounting part is located on a side of the box cover 12 that faces the flow channel plate 131, and the mounting part is adapted to be mounted to the connection segment of the crossbeam of the vehicle body, thereby fastening the box cover 12 to the vehicle body and suspending the battery pack 1 from the vehicle body.

In some embodiments, because a portion of the flow channel plate 131 forms a reinforcing part 1311, a portion of the box cover 12 that connects to the flow channel plate 131 may protrude toward a direction away from the box body 11, and the protruding portion of the box cover 12 is adapted to extend into the passenger compartment and be configured as the floor of the vehicle body. The mounting part located on the outer circumference of the box cover 12 is connected to the connection segment of the crossbeam of the vehicle body. The mounting part may be connected to the connection segment by welding or by a fastener connection. When the box cover 12 is connected to the vehicle body by welding, good sealing performance is ensured.

In conclusion, according to the box body assembly 13 of this application, the cover plate 132 of the box body assembly 13 may be the portion of the box body 11 and/or the box cover 12 that cooperates with the flow channel plate 131, so that the structure of the box body 11 and/or the box cover 12 of the battery pack 1 that integrates the cover plate 132 has a function of exchanging heat with the cell 20 in the accommodation cavity 10a. This simplifies structure of the box body assembly 13 and enriches functions of the box body 11 and/or the box cover 12. Moreover, an arrangement form of the cover plate 132 and a mounting position of the flow channel plate 131 can be selected based on different requirements, so as to be applicable to various battery packs 1. This reduces costs of the battery packs 1, improves production efficiency, simplifies a structure of the battery packs 1, and reduces a weight of the battery packs 1.

In the descriptions of this specification, descriptions with reference to the terms "an embodiment", "some embodiments", "example embodiments", "examples", "specific examples", "some examples", or the like mean specific characteristics, structures, materials or features described with reference to embodiments or examples are included in at least one embodiment or example of this application. In this specification, schematic expressions of the foregoing terms do not necessarily refer to the same embodiment or an example. Moreover, the specific characteristics, structures, materials, or features described may be combined in a proper manner in any one or more embodiments or examples.

Although embodiments of this application have been illustrated and described, a person of ordinary skill in the art should understand that various changes, modifications, substitutions and variations may be made to these embodiments without departing from the principles and purposes of this application, the scope of this application is defined by the claims and any equivalents thereof.

## Claims

1. A box body assembly for a battery pack, wherein the battery pack (1) comprises a box body (11) and a box cover (12) that are fitted together to define an accommodation cavity (10a), the box body assembly (13) comprising:
a flow channel plate (131), a flow channel groove being formed in the flow channel plate (131); and
a cover plate (132), the cover plate (132) being fastened to the flow channel plate (131) to cover the flow channel groove and define a heat exchange flow channel for circulation of a heat exchange medium, and the cover plate (132) being configured to be defined by at least one of the box body (11) and the box cover (12).

2. The box body assembly according to claim 1, wherein at least a portion of the flow channel plate (131) protrudes toward a direction away from the cover plate (132) to define the flow channel groove.

3. The box body assembly according to claim 1 or 2, wherein both the cover plate (132) and the flow channel plate (131) are integrated parts molded by stamping.

4. The box body assembly according to any one of claims 1 to 3, wherein the cover plate (132) and the flow channel plate (131) are welded or bonded together.

5. The box body assembly according to any one of claims 1 to 4, further comprising a reinforcing member (14), and the reinforcing member (14) being disposed on the cover plate (132) and surrounding the flow channel plate (131).

6. The box body assembly according to any one of claims 1 to 5, wherein the cover plate (132) is provided with a mounting part mounted to a vehicle body, and the mounting part is located on a side of the cover plate (132) that faces the flow channel plate (131).

7. A casing for a battery pack, comprising:
a box body (11) and a box cover (12), the box body (11) and the box cover (12) fitting together to define an accommodation cavity (10a); and
a box body assembly (13), the box body assembly (13) being configured as the box body assembly (13) in any one of claims 1 to 6, and the cover plate (132) being configured to be defined by at least one of the box body (11) and the box cover (12).

8. The casing according to claim 7, further comprising:
a reinforcing member (14), the reinforcing member (14) being disposed at a bottom of the box body (11) and surrounding the flow channel plate (131); and
a bottom guard plate (15), the bottom guard plate (15) being fastened to the reinforcing member (14) and located below the reinforcing member (14).

9. A battery pack, comprising:
a casing (10), the casing (10) being configured as the casing (10) according to claim 7 or 8; and
a cell (20), the cell (20) being disposed in the accommodation cavity (10a).

10. The battery pack according to claim 9, wherein the battery pack (1) is disposed on a vehicle (1000).
